# EUROPÄISCHE PATENTSCHRIFT

(11) **EP 1 818 201 B1**
(45) Veröffentlichungstag und Bekanntmachung des Hinweises auf die Patenterteilung: **19.10.2011**
(21) Anmeldenummer: 07101322.1
(22) Anmeldetag: 29.01.2007
(51) Int. Cl.: B60J 7/06, B62D 33/04

(54) **Planenverdeck für Nutzfahrzeuge**
Tarpaulin cover for commercial vehicles
Bâche pour véhicules utilitaires

(30) Priorität: 03.02.2006 DE 202006001735 U
(43) Veröffentlichungstag der Anmeldung: 15.08.2007
(73) Patentinhaber: Meusburger Fahrzeugbau GmbH, 94535 Eging am See (DE)
(72) Erfinder: Meusburger, Thomas, 6578 Caviano (CH)
(74) Vertreter: Winter, Brandl, Fürniss, Hübner, Röss, Kaiser, Polte - Partnerschaft

(56) Entgegenhaltungen:
- CA-A1- 2 349 049
- DE-U1-202004 020 580
- US-A- 3 482 716
- US-A1- 2005 184 547

## Beschreibung

Die Erfindung betrifft ein Planenverdeck für Nutzfahrzeuge, beispielsweise für Lastkraftwagen, Sattelauflieger, Anhänger oder dergleichen.

Zur Beförderung sperriger Güter ist es bereits bekannt, die Bauhöhe eines eine Ladefläche seitlich, vorne, hinten und oben überspannenden Verdecks zu erhöhen. Weiterhin ist es bekannt, bei besonders sperrigem Transportgut dieses so auf der Ladefläche abzustellen, dass es seitlich über die Grundrisslinie der Ladefläche vorsteht. Der erstere Fall ist umständlich und zeitaufwändig, im zweiten Fall ergeben sich oftmals Probleme, die Plane sauber um das Ladegut herumzuführen.

Die DE 20 2004 020580 U1 zeigt ein Fahrzeug zum Transport überbreiter Güter, bei dem zur Aufnahme eines überbreiten Ladeguts, das seitlich über die Grundabmessung der Ladefläche hinausragt, zunächst das Planenverdeck vollständig entweder nach vorne oder nach hinten entlang von Laufschienen beweglich ist und hierbei auf Hilfslaufschienen zu liegen kommt, die über die Ladefläche hinaus reichen. Danach seitliche Planenwände über entsprechende Ausleger nach außen verfahren werden, wobei das Planenportal diese Ausfahrbewegung nicht behindert, da es zusammen mit dem Planendach über den Grundriss der Ladefläche nach vorne oder hinten verschoben worden ist. Das überbreite Ladegut kann dann auf der Ladefläche abgestellt werden, die seitlichen Ausleger werden in die Ausgangslage zurückgefahren, wobei sich die seitlichen Planenwände der Breite des Ladeguts entsprechend ausbeulen und das verschobene Verdeckdach wird wieder auf den Laufschienen zurückgefahren. Ein wesentlicher Nachteil dieser Lösung ist, dass das dortige Planenverdeck die Verbreiterung nicht mitmacht, also auch bei geschlossenem Planenverdeck beidseitig ein mehr oder minder großer Spalt zwischen Planenverdeck und seitlicher Planenwand klafft. Es besteht somit kein Schutz vor Fahrtwind, Witterungseinflüssen etc.

Bei der CA 2 349 049 A1 kann ein Planenverdeck über einen Seilzugmechanismus entlang der Längserstreckung der Ladefläche verfahren werden, d.h. das Verdeckdach kann nach Art eines Schiebedaches vor- und zurückbewegt werden, wobei im zurückbewegten, d.h. geöffnetem Zustand das Verdeckdach in bogenförmigen Ablagehaken zu liegen kommt. Vertikale Stützen des Dachgestänges können in Ausleger gesteckt werden, um eine entsprechende Verbreiterung zur Aufnahme überbreiten Ladeguts zu ermöglichen. Auch hier macht die Dachplane eine derartige Verbreiterung nicht mit und das Ladegut kann nicht oder nur unzulänglich vor Fahrtwind, Witterungseinflüssen etc. geschützt werden

Bei der US 3 482 716 kann ein Auflegerkasten bestehend aus zwei Halbschalen dadurch verbreitet werden, dass die beiden Halbschalen entlang einer Längsmittelebene voneinander getrennt und seitlich nach außen verfahren werden. Der Antrieb hierzu erfolgt über ein kompliziertes Seilzugsystem. Ein dortiges Dach ist wiederum nicht in der Lage, die Verbreiterung mitzumachen und kann keinen oder nur unzulänglichen Schutz vor Fahrtwind, Witterungseinflüssen bieten.

Die vorliegende Erfindung hat es sich zur Aufgabe gemacht, eine Möglichkeit zu schaffen, auch sperriges oder großvolumiges Ladegut transportieren zu können, ohne die Bauhöhe des Verdecks ändern zu müssen und ohne Probleme bei der seitlichen Abdeckung des Ladeguts zu haben, so dass das Ladegut während des Transports stets auf optimale Weise geschützt ist.

Zur Lösung dieser Aufgabe zeichnet sich ein Planenverdeck für eine Nutzfahrzeug-Ladefläche mit einer Verbreiterungsfunktion, mit der die Ladeflächenbreite vergrößerbar ist, wobei eine Plane eines Verdeckdaches des Planenverdecks im Zuge der Ladeflächenverbreiterung diese Verbreiterung mitmacht, dadurch aus, dass die Plane im Bereich des Verdeckdaches in einer S-förmigen Faltung und damit im Überschuss derart angeordnet ist, dass das Verdeckdach im Zuge der Ladeflächenverbreiterung und nach deren Abschluss die Ladefläche in Breitenrichtung durchgehend abzudecken vermag.

Das Verdeckdach vermag somit im Zuge der Ladeflächenverbreiterung und nach deren Abschluss die Ladefläche in Breitenrichtung durchgehend abzudecken, d.h. ungeachtet der Breitenverstellung, bei der sich wenigstens eine seitliche Planenwand nach außen bewegt, steht die Abdeckung durch das Verdeckdach weiterhin uneingeschränkt zur Verfügung.

Bevorzugt ist hierbei die Plane zumindest im Bereich des Verdeckdaches zwangsgeführt.

Weiterhin kann die S-förmige Faltung der Plane derart sein, dass der Überschuss an Plane in Form einer örtlichen dreilagigen Anordnung zu liegen kommt.

Die Faltung erstreckt sich bevorzugt über die gesamte Länge des Verdeckdachs.

Es kann eine Mehrzahl von Bügeln an beweglichen, die Verbreiterung im Ladeflächenbereich mitmachenden Gestellteilen eines Planenverdeck-Rahmenwerks vorhanden sein, um welche eine Lage der Faltung derart geführt ist, dass diese Lage von den Bügeln niedergehalten und geführt ist, wobei bei einer Zurückbewegung der Gestellteile aus der verbreiterten Stellung in die Ausgangsstellung die Bügel die Faltung zwangsläufig erzeugen.

Die Verdeckbreite ist bevorzugt über die gesamte Länge des Verdeckdaches verbreiterbar.

Weiterhin ist der Betrag der Verbreiterung im Bereich des Verdeckdachs bevorzugt gleich demjenigen einer Verbreiterung im Ladeflächenbereich.

Schließlich kann das Verdeckdach als ein Schiebedach ausgebildet sein.

Die Erfindung wird nachfolgend anhand der Zeichnung näher beschrieben.

Es zeigt:
Fig. 1 schematisch eine Seitenansicht eines Sattelaufliegers;
Fig. 2 eine schematische Draufsicht auf einen Sattelauflieger;
Fig. 3 eine Fig. 2 entsprechende Ansicht, wobei die Verdeckbreite im Bereich des Verdeckdaches vergrößert ist;
Fig. 4 eine Ansicht von hinten auf einen Sattelauflieger mit verbreitertem Planenverdeck;
Fig. 5 eine Detailansicht des verbreiterten Planenverdecks im Bereich des dortigen Verdeckdachs;
Fig. 6 eine Ansicht von unten auf einen Teilbereich des Verdeckdachs; und
Fig. 7A bis 7C schematische Seitenansichten eines Dachspriegels in unterschiedlich ausgezogenen Positionen.

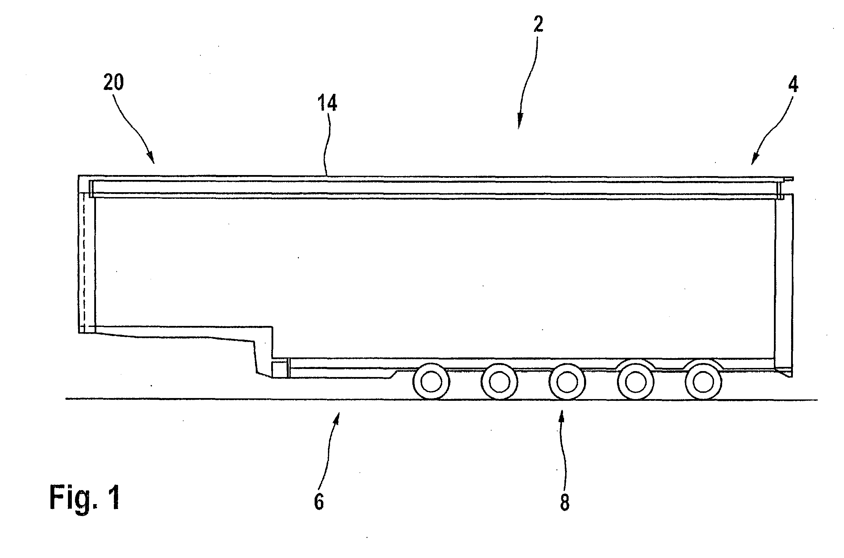

Ein in Fig. 1 insgesamt mit 2 bezeichneter Auflieger ist ein Beispiel eines Nutzfahrzeugs, bei dem das erfindungsgemäße Planenverdeck zur Anwendung gelangen kann. Es sei ausdrücklich festgehalten, dass der Gegenstand der vorliegenden Erfindung nicht auf einen derartigen Auflieger beschränkt ist.

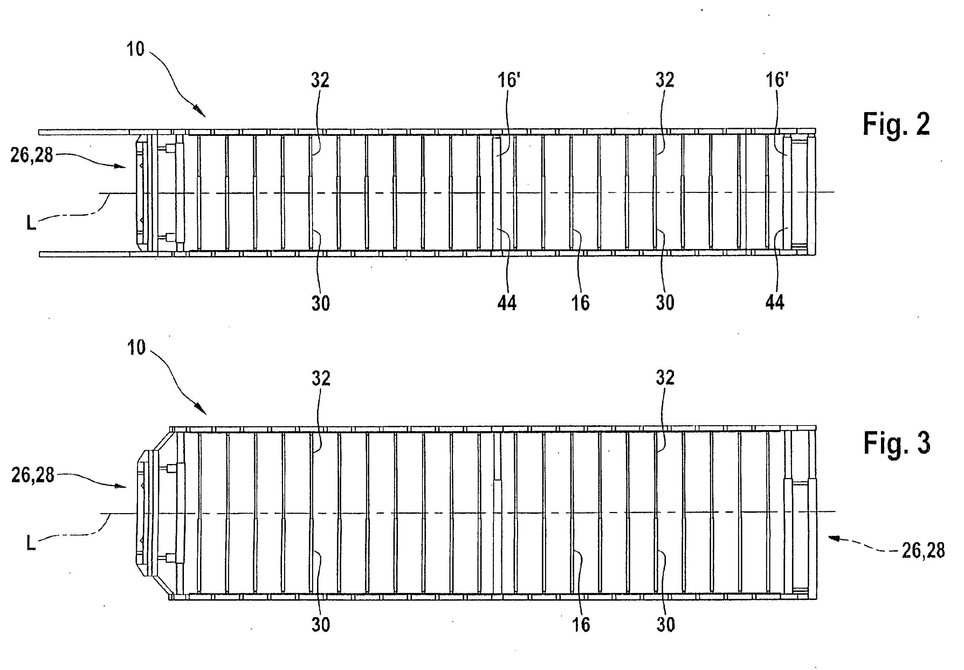

Der Auflieger 2 weist in bekannter Weise einen Aufbau 4, einen Rahmen 6 und ein am Rahmen aufgehängtes Fahrwerk 8 auf. Der Aufbau 4 wird durch ein in den Figuren 2 bis 4 sichtbares Rahmenwerk 10 bestehend aus vertikalen Trägern 12 und einer Mehrzahl von in einem Verdeckdach oder Dachbereich 14 im Wesentlichen horizontal verlaufenden Spriegeln 16 gebildet. Von der Konstruktion des Rahmenwerks 10 wird eine Planenanordnung oder Plane 18 aufgespannt, welche das Rahmenwerk 10 überdeckt, so dass der Aufbau 4 allseitig geschlossen ist.

Der Dachbereich 14 des Aufliegers 2 ist in bekannter Weise in Form eines Schiebedachs ausgeführt, d.h. die einzelnen Spriegel 16 und damit die dazwischen aufgespannte Plane 18 kann in den Figuren 1 bis 3 von rechts nach links, d.h. bezüglich des Aufliegers 2 von hinten nach vorne ziehharmonika- oder faltenbalgartig zusammengeschoben werden, so dass sich die Plane 18 des Verdeckdachs 14 bei geöffnetem Dach 14 in einem vorderen Bereich 20 des Aufbaus 4 befindet und das Innere des Aufbaus 4 auch von oben her zugänglich ist. Es sind natürlich auch andere Zusammenschiebreichtungen oder -bewegungen möglich, also von vorne nach hinten oder beidseitig in Richtung Mitte.

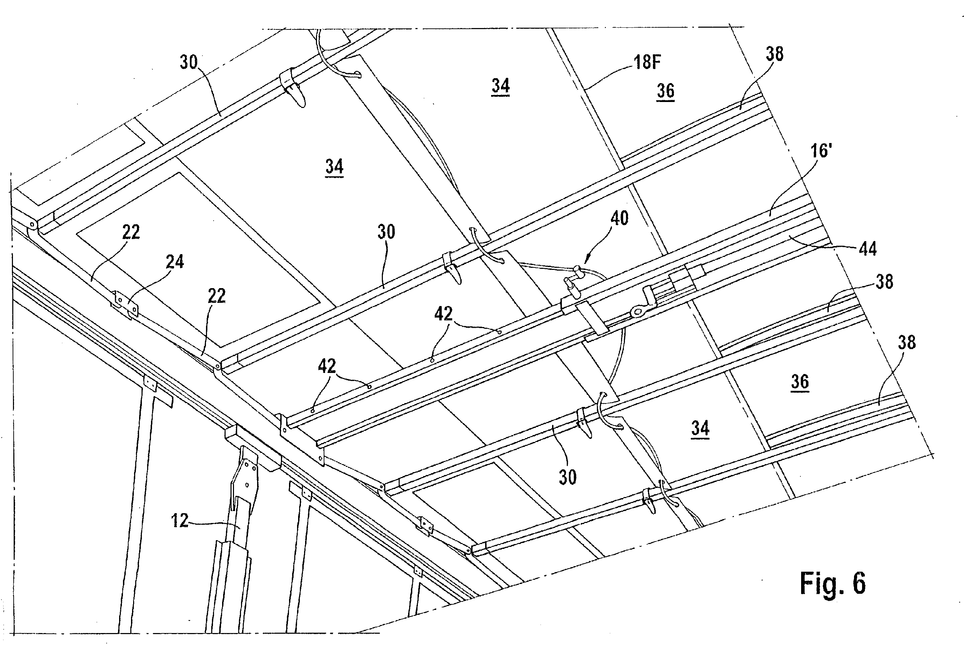

Gemäß Fig. 6 befinden sich hierzu zwischen den einzelnen Spriegeln 16 Gestänge oder Lenker 22, welche mit einem freien Ende jeweils an einem Spriegel 16 angelenkt sind und sich mit dem anderen freien Ende in einem Bereich mittig zwischen zwei benachbarten Spriegeln 16 erstrecken, wo sie über ein Gelenk 24 miteinander verbunden sind. Diese Lenker 22 halten einerseits im geschlossenen Zustand des Verdeckdachs 14 die einzelnen Spriegel 16 auf Abstand zueinander und damit die Plane 18 im Dachbereich 14 gespannt, andererseits knicken sie im Bereich des Gelenks 24 gegeneinander ein, wenn die Spriegel 16 im Zuge einer Öffnungsbewegung des Dachbereichs 14 aufeinander zu bewegt werden.

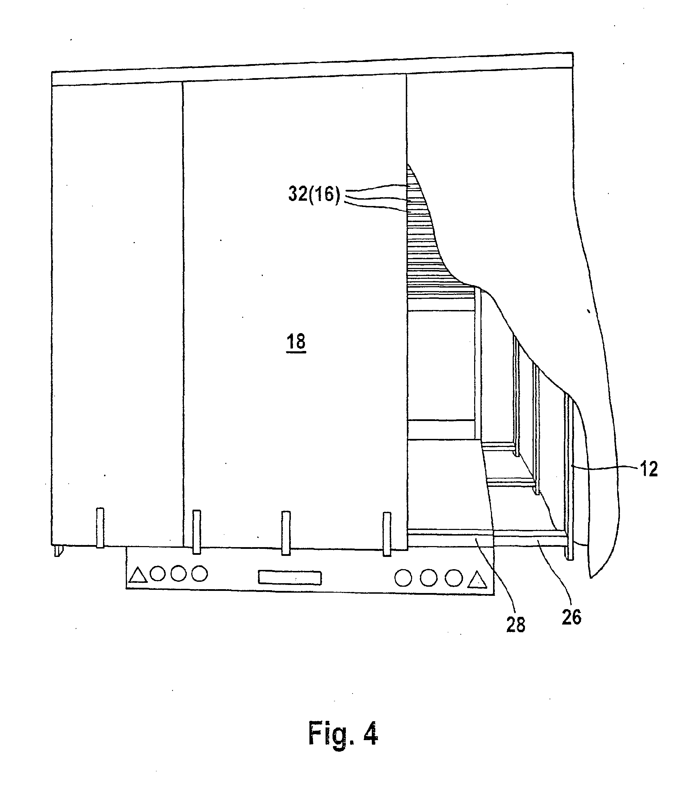

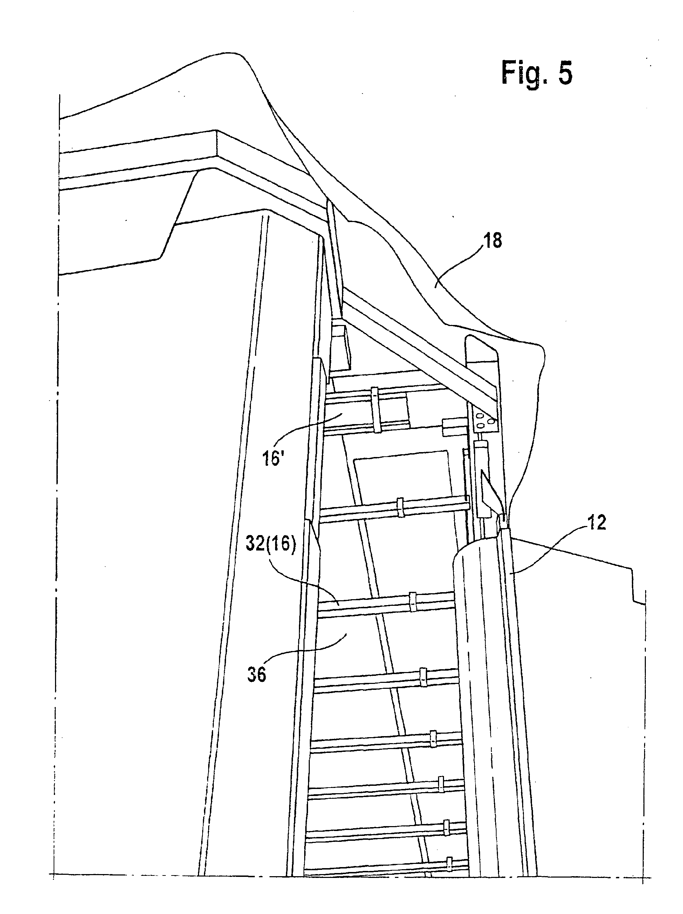

Wie weiterhin aus der Zeichnung und hier insbesondere aus den Figuren 2 bis 7 hervorgeht, sind zumindest entlang einer Längsseite des Aufliegers 2 die vertikalen Träger 12 gegenüber dem Rahmen 6 verschiebbar, d.h. von der Grundrisslinie der Ladefläche weg nach außen verfahrbar. Hierzu sind die Träger 12 gemäß Fig. 4 an horizontal verlaufenden Auslegern 26 befestigt, welche in entsprechenden Führungen 28 seitens des Rahmens 6 gelagert sind und eine im Wesentlichen horizontal verlaufende Stellbewegung nach außen von dem Rahmen 6 weg und wieder zurück unter gleichzeitiger Mitnahme der jeweiligen Träger 12 durchführen können.

Analog hierzu sind im Dachbereich 14 die einzelnen Spriegel 16 ebenfalls teleskopartig ausgeführt mit einem festen Teleskopteil 30 und einem beweglichen Teleskopteil 32, welches bezüglich dem festen Teleskopteil 30 geführt ist und linear gegenüber diesem im Wesentlichen horizontal verstellbar ist. Die freien Enden der beweglichen Teleskopteile 32 sind hierbei in dem Rahmenwerk 10 am Bereich derjenigen Träger 12 angeordnet, welche mittels der Ausleger 26 nach außen bzw. innen verfahrbar sind. Bei einer Ausfahrbewegung des Auslegers 26 aus seiner Führung heraus (beispielsweise hydraulisch, pneumatisch, mechanisch oder elektromotorisch) machen die beweglichen Teleskopteile 32 gegenüber den festen Teleskopteilen 30 eine gleichgerichtete Bewegung mit, so dass der gesamte Aufbau 4 in Fahrtrichtung gesehen eine Verbreiterung erfährt, wie am besten aus den Figuren 2 bis 4 hervorgeht. Hierbei können im Bereich des Aufbaudachs noch bevorzugt Hilfsantriebe vorgesehen sein, welche diese Bewegungen unterstützen.

Es sei an dieser Stelle festgehalten, dass die Ausfahrbewegung nicht auf eine Seite des Aufliegers 2 beschränkt ist oder sein muss, sondern bevorzugt symmetrisch bezüglich einer Längsmittellinie L (Fig. 2 und 3) des Aufliegers 2 erfolgt.

Die Plane 18 ist im Dachbereich 14 gefaltet ausgeführt. Diese in Längsrichtung des Dachbereichs 14 S-förmige Faltung 18F (Fig. 6) führt zu einer örtlichen dreilagigen Anordnung einzelner Planenabschnitte übereinander. Durch die Faltung 18F ergeben sich ein erstes Planenteil 34 und ein zweites Planenteil 36. Das erste Planenteil 34 verbleibt bei einer einseitig erfolgenden Verbreiterung des Aufbaus 4 insofern ortsfest, als es nur die Faltbewegung beim Öffnen bzw. Schließen des Dachbereichs 14 bei der Schiebedachfunktion mitmacht. Das zweite Planenteil 36 macht diese Faltbewegung ebenfalls mit, ist jedoch zusätzlich zusammen mit den beweglichen Teleskopteilen 32 gegenüber dem ersten Planenteil 34 bzw. den festen Teleskopteilen 30 verschiebbar.

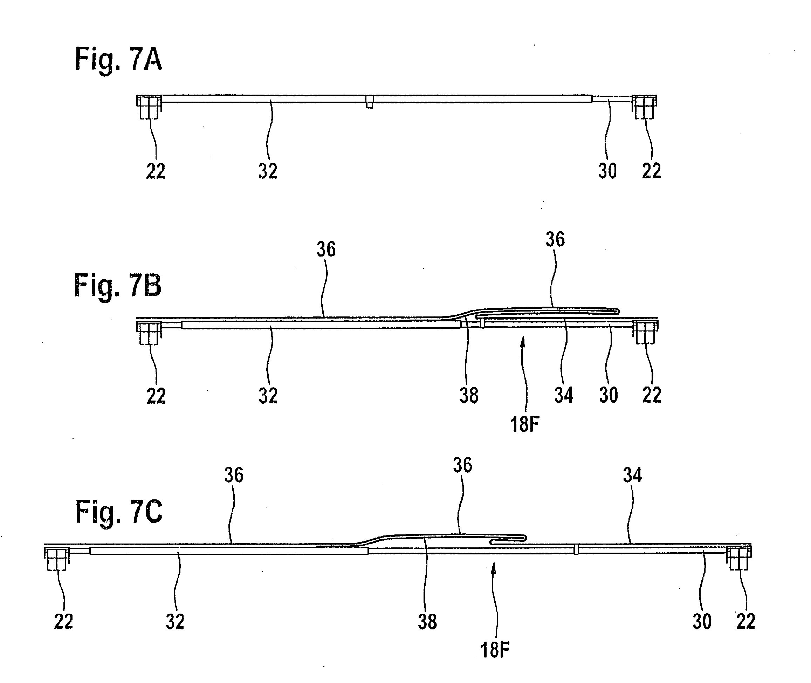

Gemäß den Figuren 6, 7b und 7c ist an dem dem festen Teleskopteil 30 zugewandten Endbereich des beweglichen Teleskopteils 32 ein Bügel 38 an der Oberseite des beweglichen Teleskopteils 32 angeordnet. Die Plane ist hierbei von der in Fig. 7B linken Seite her kommend über den Bügel 38 geführt, wird an der freien Kante des Bügels um 180° nach hinten geschlagen, läuft unter dem Bügel in Fig. 7B wieder nach links, wird nochmals um 180° umgeschlagen und verläuft dann als zweites Planenteil 36 wieder nach rechts. Hierdurch wird die S-förmige Faltung 18F im wesentlichen unter dem Bügel 38 gebildet. Der Bügel 38 bewegt sich zusammen mit dem beweglichen Teleskopteil 32 und gleitet hierbei mit seinem freien Ende auf der Oberseite des festen Teleskopteils 30 bzw. des ersten Planenteils 34, wie am besten aus den Figuren 7b und 7c hervorgeht. Hierdurch erfährt das bewegliche Planenteil 36 im Zuge einer Verstellbewegung des beweglichen Teleskopteils 32 eine saubere faltenfreie Führung. Weiterhin verbleibt der gesamte Dachbereich 14 wasser- und winddicht ohne zusätzliche Dichtelemente. Es versteht sich, dass für jeden Spriegel 16 ein Bügel 38 vorgesehen ist.

Insbesondere ermöglichen die Bügel 38, dass in jeder Relativlage des beweglichen Teleskopteils 32 zum festen Teleskopteil 30, d.h. in jeder gewählten Breite des Aufbaus 4 (innerhalb der konstruktiv vorgegebenen Grenzen) eine Schiebedachfunktion des Dachbereichs 14 uneingeschränkt möglich ist, also eine Aufeinander-zu-Bewegung der einzelnen Spriegel 16 unter Mitnahme des aus erstem Planenteil 34 und zweiten Planenteil 36 und der dazwischen liegenden Faltung 18F bestehenden Dachbereichs 14, ohne dass es zu Störungen des Schiebedach- oder Zusammenfaltbetriebs kommen würde, da das feste Planenteil 34 und insbesondere die Faltung 18F sauber zwischen dem Bügel 38 und dem festen Teleskopteil 30 gehalten und geführt ist und das zweite Planenteil und die Faltung mittels der Bügel 38 in jeder Stellung des Dachbereichs 14 über das feste Planenteil 34 geführt sind, also beim Öffnen oder Schließen des Dachbereichs 14 sich sauber zusammenfalten bzw. wieder entfalten und strecken.

Durch die erfindungsgemäße Ausgestaltung des Aufbaus 4 und hier insbesondere wiederum im Dachbereich 14 ist die Möglichkeit gegeben, das Ladevolumen des Aufliegers 2 durch eine entsprechende Verbreiterung des Aufbaus 4 zu vergrößern, d.h. insbesondere die zur Verfügung stehende Nutzfläche oder Ladefläche zu verbreitern, wobei nach wie vor eine saubere seitliche und obere Abdeckung des Ladevolumens durch die Plane 18 gegeben ist und insbesondere in einer beliebig gewählten Verbreiterungsstellung des Aufbaus 4 die Schiebedachfunktion uneingeschränkt möglich ist.

Weiterhin ist ungeachtet der gewählten Breite des Aufbaus 4 der Dachbereich stets weitestgehend glatt und faltenfrei. Es ergeben sich keine wesentlichen Luftwiderstände, Flatterbewegungen oder Flattergeräusche. Die Plane 18 wird im Betrieb nicht über das normale Maß hinaus belastet, z.B. geknickt oder dergleichen.

Die Verstellung der Breite des Aufbaus 4, d.h. der Ausfahrbetrag der Ausleger 26 und der beweglichen Teleskopteile 32 kann sowohl stufenlos als auch in Rasterstufen erfolgen. Letztere Vorgehensweise dürfte in der Praxis bevorzugt sein, da dann gemäß Fig. 6 im Bereich von hierzu gesondert ausgebildeten Spriegeln ein Verrastmechanismus 40 vorgesehen sein kann, der beispielsweise aus einem federbelasteten Bolzen seitlich des festen Teleskopteils 30 besteht, der in entsprechende Rastöffnungen 32 seitens des beweglichen Teleskopteils 32 eingreifen kann. In dem in Fig. 6 mit 16' bezeichneten Spriegel, der den Verrastmechanismus 40 trägt, kann darüber hinaus ein zusätzlicher Stellantrieb 44 vorhanden sein, der den Antrieb durch den Ausleger 26 bei einer Verbreiterungsbewegung des Aufbaus 4 unterstützen kann.

## Patentansprüche

1. Planenverdeck für eine Nutzfahrzeug-Ladefläche mit einer Verbreiterungsfunktion, mit der die Ladeflächenbreite vergrößerbar ist, wobei eine Plane (18) eines Verdeckdaches (14) des Planenverdecks im Zuge der Ladeflächenverbreiterung diese Verbreiterung mitmacht, **dadurch gekennzeichnet, dass**
die Plane (18) im Bereich des Verdeckdaches (14) in einer S-förmigen Faltung (18F) und damit im Überschuss derart angeordnet ist, dass das Verdeckdach (14) im Zuge der Ladeflächenverbreiterung und nach deren Abschluss die Ladefläche in Breitenrichtung durchgehend abzudecken vermag.

2. Planenverdeck nach Anspruch 1, **dadurch gekennzeichnet, dass** die Plane (18) zumindest im Bereich des Verdeckdaches (14) zwangsgeführt ist.

3. Planenverdeck nach Anspruch 1 oder 2, **dadurch gekennzeichnet, dass** die S-förmige Faltung (18F) der Plane (18) derart ist, dass der Überschuss an Plane (18) in Form einer örtlichen dreilagigen Anordnung zu liegen kommt.

4. Planenverdeck nach einem der Ansprüche 1 bis 3, **dadurch gekennzeichnet, dass** sich die Faltung (18F) über die gesamte Länge des Verdeckdachs (14) erstreckt.

5. Planenverdeck nach einem der vorhergehenden Ansprüche, **dadurch gekennzeichnet, dass** eine Mehrzahl von Bügeln (38) an beweglichen, die Verbreiterung im Ladeflächenbereich mitmachenden Gestellteilen (32) eines Planenverdeck-Rahmenwerks (10) vorhanden ist, um welche eine Lage (36) der Faltung (18F) derart geführt ist, dass diese Lage von den Bügeln (38) niedergehalten und geführt ist, wobei bei einer Zurückbewegung der Gestellteile (32) aus der verbreiterten Stellung in die Ausgangsstellung die Bügel (38) die Faltung (18F) zwangsläufig erzeugen.

6. Planenverdeck nach einem der vorhergehenden Ansprüche, **dadurch gekennzeichnet, dass** die Verdeckbreite über die gesamte Länge des Verdeckdaches (14) verbreiterbar ist.

7. Planenverdeck nach einem der vorhergehenden Ansprüche, **dadurch gekennzeichnet, dass** der Betrag der Verbreiterung im Bereich des Verdeckdachs (14) gleich demjenigen einer Verbreiterung im Ladeflächenbereich ist.

8. Planenverdeck nach einem der vorhergehenden Ansprüche, **dadurch gekennzeichnet, dass** das Verdeckdach (14) ein Schiebedach ist.

## Claims

1. Tarpaulin cover for a commercial vehicle loading area having an expansion function, by means of which the loading area width can be increased, a tarpaulin (18) of a covering roof (14) of the tarpaulin cover also carrying out that expansion following the expansion of the loading area, **characterised in that**
the tarpaulin (18) is arranged in the region of the covering roof (14) in an S-shaped fold (18F) and therefore with excess in such a manner that the covering roof (14) is capable of covering the loading area continuously in the width direction during the expansion of the loading area and after the conclusion thereof.

2. Tarpaulin cover according to claim 1, **characterised in that** the tarpaulin (18) is restrictedly guided at least in the region of the covering roof (14).

3. Tarpaulin cover according to claim 1 or claim 2, **characterised in that** the S-shaped fold (18F) of the tarpaulin (18) is such that the excess of tarpaulin (18) comes to rest in the form of a local three-layered arrangement.

4. Tarpaulin cover according to any one of claims 1 to 3, **characterised in that** the fold (18F) extends over the entire length of the covering roof (14).

5. Tarpaulin cover according to any one of the preceding claims, **characterised in that** a plurality of curved members (38) are provided on movable frame components (32) of a tarpaulin cover framework (10), which frame components also carry out the expansion in the loading area region, about which a layer (36) of the fold (18F) is guided in such a manner that this layer is held down and guided by the curved members (38), the curved members (38) necessarily producing the fold (18F) when the frame components (32) move back out of the expanded position into the initial position.

6. Tarpaulin cover according to any one of the preceding claims, **characterised in that** the covering width can be expanded over the entire length of the covering roof (14).

7. Tarpaulin cover according to any one of the preceding claims, **characterised in that** the amount of expansion in the region of the covering roof (14) is equal to that of an expansion in the loading area region.

8. Tarpaulin cover according to any one of the preceding claims, **characterised in that** the covering roof (14) is a sliding roof.

## Revendications

1. Bâche pour une surface de chargement de véhicule utilitaire avec une fonction d'élargissement, avec laquelle la largeur de la surface de chargement peut être agrandie, sachant qu'une bâche (18) d'un toit (14) de bâche participe à cet élargissement au cours de l'élargissement de la surface de chargement, **caractérisée en ce que**
la bâche (18) est disposée dans la zone du toit (14) dans un pliage en forme de S (18F) et ainsi en surplus de telle manière que le toit (14) puisse recouvrir en continu la surface de chargement dans le sens de la largeur au cours de l'élargissement de la surface de chargement et après sa clôture.

2. Bâche selon la revendication 1, **caractérisée en ce que** la bâche (18) est guidée à force au moins dans la zone du toit (14).

3. Bâche selon la revendication 1 ou 2, **caractérisée en ce que** le pliage en forme de S (18F) de la bâche (18) est tel que le surplus de bâche (18) vient se poser sous la forme d'une disposition locale à trois couches.

4. Bâche selon l'une quelconque des revendications 1 à 3, **caractérisée en ce que** le pliage (18F) s'étend sur toute la longueur du toit (14).

5. Bâche selon l'une quelconque des revendications précédentes, **caractérisée en ce qu'**une pluralité d'étriers (38) est présente sur des parties de châssis (32) mobiles, participant à l'élargissement dans la zone de la surface de chargement d'un cadre de bâche (10), autour desquelles une couche (36) du pliage (18F) est guidée de telle manière que cette couche soit maintenue baissée et guidée par les étriers (38), sachant que lors d'un mouvement en arrière des parties de châssis (32) de la position élargie à la position de départ, les étriers (38) génèrent forcément le pliage (18F).

6. Bâche selon l'une quelconque des revendications précédentes, **caractérisée en ce que** la largeur peut être élargie sur toute la longueur du toit (14).

7. Bâche selon l'une quelconque des revendications précédentes, **caractérisée en ce que** la valeur de l'élargissement dans la zone du toit (14) est identique à celle d'un élargissement dans la zone de la surface de chargement.

8. Bâche selon l'une quelconque des revendications précédentes, **caractérisée en ce que** le toit (14) est un toit ouvrant.
